# NEUE EUROPÄISCHE PATENTSCHRIFT

(11) **EP 0 850 601 B2**
(45) Veröffentlichungstag und Bekanntmachung des Hinweises auf die Entscheidung über den Einspruch: **05.08.2009**
(45) Hinweis auf die Patenterteilung: 16.03.2005
(21) Anmeldenummer: 97122107.2
(22) Anmeldetag: 16.12.1997
(51) Int. Cl.: A61C 13/00, A61C 13/09

(54) **Halbzeug als Formkörper zur Herstellung von Zahnersatzteilen**
Semi-finished product for manufacturing dental prostheses
Produit semi-fini destiné à la fabrication de prothèses dentaires

(30) Priorität: 23.12.1996 DE 19654055
(43) Veröffentlichungstag der Anmeldung: 01.07.1998
(73) Patentinhaber: Ivoclar Vivadent AG, 9494 Schaan (LI)
(72) Erfinder: Eykmann, Rudolf, 61273 Wehrheim (DE); Schödel, Dieter, Dr., 65193 Wiesbaden (DE); Luthardt, Ralph, Dr., 65187 Wiesbaden (DE); Gogswaardt, D.C.W. Dr., 07743 Jena (DE); Musil, Rudolf, Prof. Dr., 07751 Münchenroda (DE)
(74) Vertreter: UEXKÜLL & STOLBERG

(56) Entgegenhaltungen:
- CH-A- 458 617
- DE-A- 4 426 994
- DE-C- 733 570
- DE-C- 746 376
- FR-A- 998 598
- US-A- 4 433 959
- US-A- 5 009 597
- US-A- 5 151 044
- US-A- 5 171 147

## Beschreibung

Die vorliegende Erfindung betrifft ein Halbzeug als Formkörper zur Herstellung von Zahnersatzteilen, wie Kronen, Inlays, Onlays, Veneers, Brücken oder Brückenteilen, durch Materialabtragen.

Es ist bekannt, Zahnersatzteile, wie Kronen, Inlays, Onlays, Veneers, Brücken oder Brückenteile, aus einem Formkörper herzustellen, indem ein solcher Formkörper durch Schleifen oder Fräsen seiner Außenseite zu dem gewünschten Zahnersatzteil geformt wird.

In Bezug auf die vorstehend angegebene Verfahrensweise sind verschiedene Systeme bekannt, die sich wie folgt darstellen lassen:

Bei dem sogenannten "Cerec-System" bzw. der "Cerec-Methode" wird das herzustellende Zahnersatzteil koordinatenmäßig erfaßt und die Daten werden dann einer Frässtation zugeführt. In die Frässtation wird ein Formkörper eingespannt, der bei diesem System aus Aluminiumoxidkeramik besteht. Anschließend wird der Formkörper so bearbeitet, daß beispielsweise eine Rohkrone erzeugt wird. Danach wird die noch offenporige Keramik mit Lanthan-Glas infiltriert, um eine gewisse Festigkeit des Formkörpers zu erzielen. Als abschließender Schritt erfolgt eine Verblendung des infiltrierten Rohteils. Entsprechend den ästhetischen Anforderungen, insbesondere in Bezug auf die Farbcharakterisierung, werden unterschiedliche Farbkomponenten aufgetragen, was sehr zeitaufwendig ist. Ohne die Farbkomponenten (Verblendkeramik) kann mit diesem System nicht den ästhetischen Ansprüchen ndchgekommen werden. Hinzu kommt, daß bei großen Schichtstärken der porösen Keramik der Infiltrationsprozeß mit Lanthan-Glas nicht definiert kontrollierbar ist.

Mit dem sogenannten "Cicero-System" lassen sich metall-keramische Kronen maschinell erstellen. Auch bei diesem System werden die Daten des zu erstellenden Zahnersatzteils erfaßt und einer 3D-Fräsmaschine zugeführt, die einen Formkörper entsprechend den eingegebenen Daten fräst. Im Rahmen dieses Verfahrens wird nicht nur der das Untergerüst bildende Formkörper hinsichtlich seiner Koordinaten berechnet, sondern auch ein konkreter Materialaufbau, der später auf dem gefrästen Formkörper gebildet werden soll, um das entsprechende Material in der geeigneten Schichtdicke an den verschiedenen Bereichen des Rohlings unter Einhaltung der Enddimensionen aufzubauen. Als Formkörper wird eine feuerfeste Keramik mit diamantierten und Hartmetall-Fräsern bearbeitet. Anschließend wird als äußeres Material eine Keramik bestehend aus verschiedenen Farbkomponeten auf den vorgefrästen Block aufgebracht.

Bei einem weiteren System, dem sogenannte "Precident-System", wird auch eine mittels Computer unterstützte Frästechnik angewandt. Als Ausgangskörper wird ein Materialrohling aus Titan oder Zirkon-Oxid eingesetzt. Um ein ästhetisch ansprechendes Bild des Zahnersatzes unter Anwendung dieses Verfahrens zu erzielen, müssen noch weitere Bearbeitungsschritte bzw. Verblendmaßnahmen vorgenommen werden.

Zusammenfassend ist festzustellen, daß sich bei den Verfahren nach dem Stand der Technik, wie sie vorstehend beschrieben sind, nach dem Fräsen des Formkörpers zeitaufwendige Verfahrensschritte anschließen müssen, um ein ästhetisches, dem natürlichen Zahn möglichst nahekommendes Erscheinungsbild des Zahnersatzes zu erzielen. Solche sind, wie vorstehend angeführt, beispielsweise verschiedene Verblendschritte.

Die Formkörper, die gemäß den vorstehenden Verfahren bereitgestellt werden, werden industriell in verschiedenen, eng begrenzten Grundformen vorgefertigt, so daß aus diesen Systemen von Grundkörpern die jeweils geeigneten Formen zum Fräsen der Zahnersatzteile herangezogen werden.

Es ist auch bekannt, Zahnersatz unter Anfertigung eines Gerüsts aufzubauen. Diese Gerüste werden auf den Patienten abgestimmt gefertigt, um anschließend darauf, beispielsweise auf einem Modellstumpf, ein Kernmaterial in definierten Schichten aufzutragen und auszuhärten, um darauf wiederum ein Verblendmaterial aufzutragen und auszuhärten oder zu brennen Das aufgetragene Verblendmaterial wird dann endbearbeitet, beispielsweise durch Fräsen und Polieren bis zum Hochglanz. Ein derartiges Verfahren führt zu ästhetisch guten Ergebnissen, ist allerdings mit mehreren, verschiedenen Verfahrensschritten verbunden und daher zeitintensiv, um die einzelnen Schichten des Zahnersatzes aufzubauen. Eine derartige Herstellung eines Zahnersatzteils aus Kunststoff ist aus der DE-PS 37 08 618 bekannt.

US 5 151 044 offenbart einem Formkörper, welcher die Merkmale des Oberbegriff von Anspruch 1 aufweist.

Ausgehend von dem eingangs beschriebenen Stand der Technik liegt der vorliegenden Erfindung nun die Aufgabe zugrunde, ein Halbzeug als Formkörper zur Herstellung von Zahnersatzteilen bereitzustellen, das industriell vorgefertigt werden kann, um daraus einen Zahnersatz herzustellen, der ohne wesentliche Oberflächenbearbeitung und/oder Beschichtung bzw. Verblendung dem ästhetischen Erscheinungsbild des natürlichen, zu ersetzenden Zahns angepaßt ist.

Diese Aufgabe wird erfindungsgemäß, durch die Merkmale des Anspruchs 1 gelöst. Durch den Aufbau des Formkörpers in Form eines Basiskörpers mit einer Schicht, wobei die Schicht eine geringere Pigmentierung besitzt als der Basiskörper, wird bereits der Formkörper in seinem farblichen Erscheinungsbild dem zu ersetzenden Zahnbereich angepaßt. Aus diesem Formkörper wird dann der zu erstellende Zahnersatz mit rotierenden Instrumenten, vorzugsweise spanabhebend auf seine Endaußenkontur bearbeitet. Anschließend kann das auf die Endabmessungen bearbeitete Zahnersatzteil poliert werden. Je nach der Form des zu erstellenden Zahnersatzteils wird eine vorgegebene Grundform eines Formkörpers, beispielsweise aus einem System von drei oder vier Grundformen, verwendet, so daß bereits durch die Grundform das grobe, formmäßige Erscheinungsbild des Zahnersatzes vorgegeben ist. Im Rahmen der Konturausarbeitung des Zahnersatzes wird zunächst die auf den Basiskörper aufgebrachte Schicht bearbeitet. Der Formkörper wird hierzu bevorzugt so bearbeitet, daß im sichtbaren Bereich diese Nacharbeitung der Kontur nur in der äußeren Schicht erfolgt, so daß ein Fräsen des Formkörpers bis zur Tiefe des Basiskörpers nicht erfolgt. Aufgrund der unterschiedlichen Pigmentierung kann gerade in diesem sichtbaren Bereich die äußere Schicht, die geringer als der Basiskörper pigmentiert ist, zusammen mit dem darunterliegenden, durchscheinenden Material des Basiskörpers, das natürliche Erscheinungsbild des Zahnschmelzes bzw. Dentins angenähert werden. Selbst wenn es die Formgebung erfordert, daß an gewissen Stellen der Formkörper so stark in der Oberfläche bearbeitet wird, daß ein Abtrag bis zu dem Material des Basiskörpers erfolgt, bleibt dennoch das dem natürlichen Zahn angepaßte Erscheinungsbild im wesentlichen erhalten. Der Zahnersatz kann demnach ohne aufwendige Beschichtung eines Grund- oder Tragkörpers erstellt werden. Außerdem können Formkörper in verschiedenen Zahnfarben, z. B. in allen 16 sogenannten "VITA-Farben", bereitgestellt werden, d.h. in solchen Farben, daß das Enderscheinungsbild des Zahnersatzes demjenigen des zu ersetzenden Zahnbereichs entspricht. Selbstverständlich kann, falls erforderlich, ein nachträglicher Auftrag eines erforderlichen Oberflächenmaterials erfolgen, was aber nur dann erfolgen sollte, wenn der bereitgestellte Formkörper nur sehr grob dem zu erstellenden Zahnersatz angepaßt ist. Eine solche Nacharbeitung kann auch dann dienlich sein, wenn in eng begrenzten Zonen die äußere Schicht soweit abgefräst ist, daß der Basiskörper zur Oberfläche freigelegt ist. Gleichzeitig kann eine Ergänzung bzw. Reparatur leicht im Mund vorgenommen werden, wenn dies erforderlich oder gewünscht wird.

Durch den erfindungsgemäßen Formkörper können die Herstellkosten eines herzustellenden Zahnersatzes erheblich im Vergleich zu bekannten Verfahrensweisen herabgesetzt werden, da die Herstellung des Zahnersatzes im wesentlichen nur durch einen Abtrag des Formkörpers erfolgt, bis die Endform erreicht wird, im Gegensatz zu Maßnahmen nach dem Stand der Technik, wo anschließend, gerade um das farbliche Erscheinungsbild des Zahnersatzes dem des natürlichen Zahns anzupassen, ein arbeitsintensiver Aufbau mit zusätzlicher Beschichtung, wie Verblendung, erforderlich ist.

Der Basiskörper kann bevorzugt mit mehreren Schichten bedeckt sein, die diesen an verschiedenen Oberflächenbereichen abdecken. Hierdurch ist es beispielsweise möglich, einem Zahnersatz, der über seine Oberfläche eine unterschiedliche Farbgebung erhalten soll, mit dieser Schichtung herzustellen, wobei dann die verschiedenen Schichten unterschiedlich pigmentiert sind, um dieses Farbbild zu erzielen. Solche Schichten können sich teilweise überlappen. Um eine gewisse Abstufung der Farbgebung von der äußeren Schicht zu dem Basiskörper hin zu erzielen, können mehrere Schichten übereinander gelegt sein, die dann jeweils eine unterschiedliche, definiert abgestufte Pigmentierung besitzen. Hierdurch ist eine einfache, über den Schichtaufbau herstellbare Feinabstimmung der Farbe möglich.

Um das äußere Erscheinungsbild eines aus einem Formkörper gemäß der Erfindung herzustellenden Zahnersatzes dem natürlichen Zahn, der ersetzt werden soll, sehr nahe anzupassen, sollten der Basiskörper und die äußere Schicht einen Unterschied in der Transparenz von mindestens 10% aufweisen. Hierdurch wird eine Wirkung erzielt, die derjenigen entspricht, die dem des Dentins des natürlichen überdeckenden Schmelzes entspricht. Weiterhin sollte der Basiskörper eine Transparenz für Strahlung in sichtbaren Wellenlängenbereich und bezogen auf eine Materialdicke von 1 mm von 20 bis 45%, vorzugsweise im Bereich von 35 bis 40%, besitzen. Im Gegensatz dazu sollte die äußere Schicht, bezogen auf Strahlung im sichtbaren Wellenlängenbereich und bezogen auf eine Materialdicke von 1 mm, eine Transparenz von 55 bis 90 %, vorzugsweise im Bereich von 60 bis 80%, haben.

Eine geeignete Dicke der äußeren Schicht beträgt mindestens 0,1 mm. Sie sollte eine maximale Dicke von 10 mm, vorzugsweise 2 mm, nicht überschreiten. Die bevorzugte Schichtdicke liegt zwischen 0,1 und 1,5 mm.

Für die äußere Geometrie des Formkörpers werden bevorzugt stabförmige Teile eingesetzt mit zwei Stirnflächen an gegenüberliegenden Seiten. Solche Formkörper sind mit einer Länge von 10 bis 50 mm, vorzugsweise zwischen 10 und 20 mm, in Richtung der Längsachse dimensioniert. Darüberhinaus sollten die Stirnflächen einen kreis- oder ellipsenförmigen Querschnitt aufweisen. Der Durchmesser der Stirnflächen liegt hierbei zwischen 5 und 30 mm.

Aus Formkörpern, die gemäß den vorstehenden Angaben dimensioniert sind, können die verschiedenen, zu ersetzenden Zähne gefräst werden, soweit es sich um einen einzelnen Zahnersatz handelt. Durch eine leicht konische Form in Richtung der Achse des stabförmigen Formkörpers gesehen, kann bereits durch die Grundform des Formkörpers der zu ersetzende Zahn in Bezug auf seine Zahnachse und seine Kaufläche bzw. Schneidkante angepaßt werden. Es ist ersichtlich, daß diejenige Stirnfläche des fertiggestellten Zahnersatzes, die dem Zahnstumpf zugewandt ist bzw. die Kroneninnenseite bildet, unmittelbar durch das Material des Basiskörpers gebildet werden kann. Dieser Bereich bietet sich auch dazu an, in das Bearbeitungswerkzeug eingespannt zu werden, wozu der Basiskörper entsprechend verlängert werden kann oder in diese Stirnfläche ein Haltezapfen eingesetzt werden kann. Bei einem konisch ausgebildeten Formkörper handelt es sich dabei um die Stirnfläche mit dem kleineren Querschnitt.

In einem weiteren, bevorzugten Aufbau des Halbzeugs bzw. des Formkörpers wird die Dicke der Schicht oder die Dicke der Schichten in Richtung der Längsachse gesehen zu der Stirnfläche mit dem großen Querschnitt hin zunehmend ausgebildet. Dies kann dadurch erreicht werden, daß der Basiskörper durch einen zylindrischen oder stabförmigen Körper gebildet wird, der entlang seiner Längsachse einen gleichbleibenden Querschnitt aufweist, während die konische Außenform nur durch den unterschiedlich dicken Schichtaufbau erzeugt ist. Hierdurch kann für den Basiskörper eine Grundform mit gleichbleibendem Querschnitt verwendet werden, indem beispielsweise solche Basiskörper von einem Endlosstab entsprechend abgelängt werden. Durch den unterschiedlichen Aufbau der Schicht ergibt sich eine große Flexibilität in Bezug auf die Anpassung dieses Formkörpers bzw. Halbzeugs an die Formgebung des herzustellenden Zahnersatzes, und zwar unter Beibehaltung des farblichen Erscheinungsbilds des zu ersetzenden Zahns.

Bevorzugt wird als Werkstoff für das Halbzeug ein Dental-Kunststoff verwendet, der mit mindestens 30-Gew.% anorganischem Füllstoff gefüllt ist. Bei einem solchen Material handelt es sich um eine Materialart, die in ihrer Festigkeit zwischen einem reinen Kunststoff und einer Keramik liegt. Es hat sich gezeigt, daß Formkörper, die nur aus Kunststoff hergestellt sind, beim Oberflächenbearbeiten schmieren und unter anderem das jeweilige Werkzeug zusetzen. Im Gegensatz dazu sind Keramiken nur durch mit Diamant bestückte Werkzeuge bearbeitbar, d.h. es ergibt sich eine relativ große Oberflächenrauhigkeit, die nur durch eine anschließende, aufwendige Politur beseitigt werden kann. Durch die vorstehend angegebene, bevorzugte Materialzusammensetzung werden in Bezug auf die Oberflächenbearbeitung und dann, wenn sie mechanisch erfolgt, Vorteile dadurch erzielt, daß diese Bearbeitung spanabhebend vorgenommen werden kann. Mit einer solchen spanabhebenden Bearbeitung können, im Gegensatz zu einem Schleifen, bereits sehr glatte Oberflächenstrukturen erzielt werden, die, wenn überhaupt, nur einer geringen Nachpolitur bedürfen. Weitere Vorzüge eines solchen mit einem hohen Anteil an anorganischen Materialen gefüllten Kunststoffs liegen in einer hohen Biegebruchfähigkeit, die deutlich höher als bei einer Keramik liegt sowie einem E-Modul der erheblich geringer ist als derjenige von Verblendkeramiken, so daß solche Halbzeuge auch für als Implantat getragene Konstruktionen einsetzbar sind. Der Formkörper ist bevorzugt gebildet aus etwa 30 bis 60 Gew.-% feinstgemahlenem Ba-Al-Silikatglas (Korngröße < 2 µm, mittlere Korngröße = 0,7 µm), etwa 5 bis 30 Gew.-% rheologisch wirksamer Kieselsäure (Primärkorngröße ca. 1 µm) und etwa 10 bis 35 Gew.-% organischem Glas eines Gemisches aus mehrfunktionellen, hochmolekularen Methacrylsäureestern. Unter den vorstehend beschriebenen Materialien ist ein Material hervorzuheben, das folgende Zusammensetzung aufweist:

Der Werkstoff für das Halbzeug umfaßt im wesentlichen drei Glas- oder glasähnliche (vitroiden) Bestandteile:
a) feinstgemahlenes Ba-Al-Silikatglas (Korngröße < 2 µm, mittlere Korngröße = 0,7 µm) ca. 55 Gew.-%
b) rheologisch wirksame Kieselsäure (ein Quarzglasrohstoff, Primärkorngröße ca. 1 µm) ca. 15 Gew.-%
c) organisches Glas (aus abgestimmt mehrfunktionellen, hochmolekularen Methacrylsäureestem, die zu deutlich höher vernetzten, amorphen Strukturen führen als herkömmliche Monomermatrices) ca. 30 Gew.-% inklusive aller Hilfsstoffe.

Zur Herstellung des Halbzeugs werden die drei Bestandteile gemischt und durch lichtinduzierte Vernetzung der reaktiven Methacrylsäureester-Komponenten ein polymeres, organisches Glas gebildet, (hochvernetzte, amorphe Struktur unter Silan-Einbindung der poly-funktionalisierten Glasfüllstoffe), so daß ein homogener, glasähnlicher, zäher Werkstoff (Vitroid) entsteht

Weitere Einzelheiten und Merkmale des erfindungsgemäßen Halbzeugs ergeben sich aus der nachfolgenden Beschreibung von Ausführungsbeispielen anhand der Zeichnung. In der Zeichnung zeigt:
- Figur 1: eine perspektivische Darstellung eines quaderförmigen Halbzeugs gemäß der Erfindung mit einem angedeuteten Zahn, der daraus gefertigt werden kann,
- Figur 2: einen Schnitt entlang der Linie II-II in Figur 1,
- Figur 3: ein weiteres Halbzeug in Form eines umgekehrten Kegelstumpfes,
- Figur 4: einen Schnitt durch ein Halbzeug entlang der Längsachse, mit einem zweischichtigen äußeren Aufbau, und
- Figur 5: eine der Figur 4 entsprechende Darstellung eines Halbzeugs mit elliptischem Querschnitt.

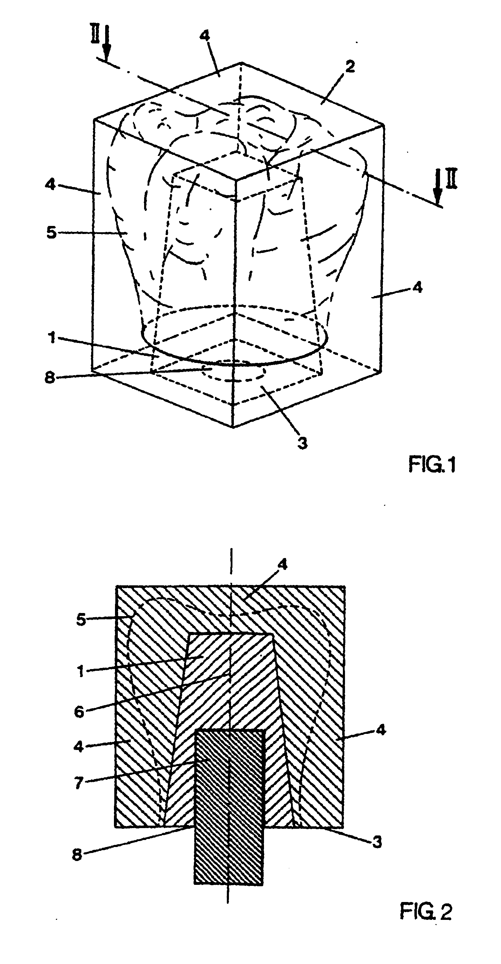

Das Halbzeug, wie es in den Figuren 1 und 2 dargestellt ist, dient als Formkörper zur Herstellung von Zahnersatzteilen, wie beispielsweise einer Zahnkrone. Der Formkörper besitzt einen inneren Basiskörper 1, der eine konische, sich zur Oberseite 2 hin verjüngende Form aufweist, mit einer etwa quadratischen Grundfläche 3. Der konische Basiskörper 1 ist, abgesehen von der Grundfläche 3, auf allen fünf verbleibenden Seitenflächen von einer äußeren Schicht 4 umgeben. Basiskörper 2 und die Schichten 4 sind aus einem Dentalkunststoff gefertigt, bei dem es sich vorzugsweise um einen mit einem anorganischen Füllstoff gefüllten Kunststoff handelt, wobei der Füllstoffgehalt mindestens 30 Gew.-% beträgt. Als Füllstoffe werden zum Beispiel Ba-Al-Si-Glas oder keramische Splitter eingesetzt.

Der Basiskörper 1 unterscheidet sich von den ihn umgebenden äußeren Schichten durch die unterschiedliche Pigmentierung, d.h. der Basiskörper 1 ist stärker pigmentiert als die Schichten 4. Mit einer solchen Maßnahme soll der Formkörper in seiner Materialstruktur und damit seinem äußeren Erscheinungsbild, nachdem ein dentales Ersatzteil daraus gefräst wurde, dem natürlichen Erscheinungsbild des Zahns, der ersetzt werden soll, angepaßt werden. Wie gut anhand der Schnittdarstellung der Figur 2 zu erkennen ist, ist die Form des Basiskörpers 1 so gewählt, daß er in dem Kernbereich des später daraus zu fräsenden Zahns liegt (im vorliegenden Beispiel ein Backenzahn), während die äußeren Schichten 4 die Außenseite, vergleichbar mit dem Zahnschmelz eines natürlichen Zahns, bilden. Die vorstehend angesprochene Transparenz des Basiskörpers 1 sowie die der äußeren Schichten 4 ist bevorzugt so gewählt, daß die Transparenz des Basiskörpers 1 zwischen 35 bis 40 % beträgt, während diejenige der äußersten Schichten 4 zwischen 55 und 90 % liegt, und zwar bezogen auf eine Materialdicke von 1 mm und für Wellenlänge im sichtbaren Bereich.

Um aus einem Halbzeug gemäß der Erfindung ein dentales Ersatzteil herzustellen, wird ein dem Ersatzteil entsprechendes Halbzeug bzw. ein Formkörper aus einem entsprechenden, bereitgestellten Sortiment ausgewählt, der der Form des zu erstellenden Ersatzteiles am nächsten kommt. Danach wird das herzustellende Ersatzteil koordinatenmäßig in Bezug auf den Formkörper festgelegt, beispielsweise so, daß die herzustellende Krone (hier Backenzahn) 5 der Figur 1 im wesentlichen zentrisch zu der Achse 6 orientiert ist. Danach wird das Halbzeug mittels eines Haltezapfens 7, der in einer entsprechenden Aufnahmebohrung von der Grundfläche 3 aus in dem Basiskörper 1 eingesetzt ist, eingespannt. Anschließend wird mit einem Fräswerkzeug entsprechend den vorgegebenen Koordinaten der Außenkontur der Krone (hier Backenzahn) 5 gefräst. Nachdem das Zahnersatzteil fertiggestellt ist, kann es in seiner Länge, d.h. in seiner Länge in Richtung der Achse 6, von der Grundfläche 3 aus auf die entsprechende Länge, die für das Zahnersatzteil erforderlich ist, gekürzt werden. Die fertiggestellte Krone (hier Bakkenzahn) 5 besitzt als Kern den Basiskörper 1, der dann allseitig auf der Außenseite von dem Material der äußeren Schicht 4 umgeben ist. Aufgrund der geringeren Pigmentierung der äußeren Schicht 4 zeigt diese Schicht 4 ein Erscheinungsbild, das dem Zahnschmelz angepaßt ist, insbesondere auch dadurch, daß der Basiskörper eine höhere Pigmentierung und damit geringere Transparenz als die äußere Schicht 4 besitzt, so daß der Basiskörper 1 die äußere Schicht 4 hinterlegt, ähnlich dem Dentin des natürlichen Zahns. Durch diese unterschiedliche Transparenz ergibt sich ein Erscheinungsbild, das dem des Transparenzverhaltens eines natürlichen Zahns anpaßbar ist.

Es wird ersichtlich, daß für die verschiedenen Zahnersatzteile, die bestimmte Zähne ersetzen sollen, beispielsweise Molaren (Seitenzähne) oder Prämolaren (kleine Seitenzähne), bestimmte Grundformen des Halbzeugs bereitgestellt werden müssen, um daraus ein entsprechendes Zahnersatzteil zu fräsen.

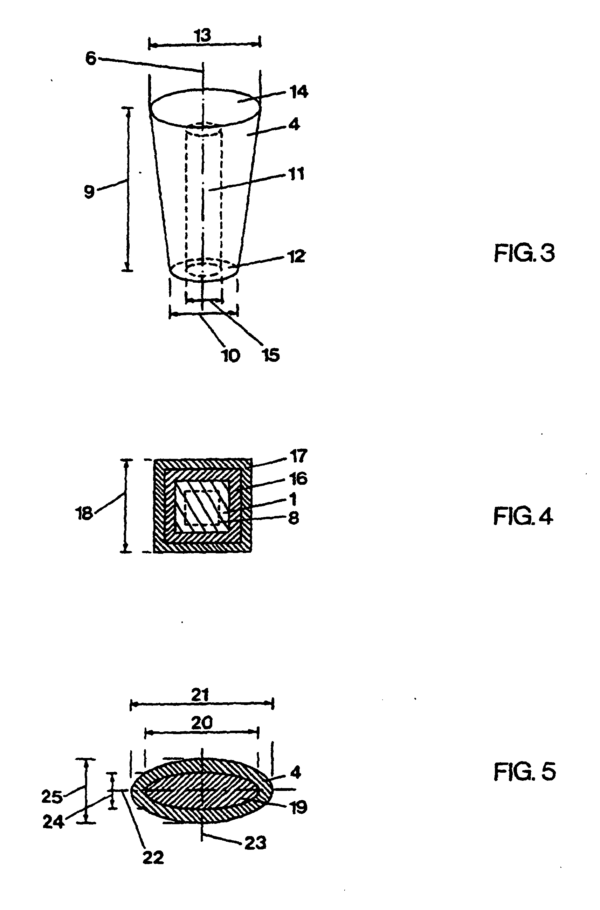

In Figur 3 ist ein Halbzeug in Form eines umgekehrten Kegelstumpfes dargestellt. Der Basiskörper 11 ist aus einem zylindrischen Stab gebildet, während die äußere Schicht 4 den eigentlichen Konus bildet. Ein derartig geformtes Halbzeug kann dazu eingesetzt werden, daraus einen Eckzahn oder einen Frontzahn zu fräsen. Wiederum kann vor dem Fräsvorgang der zu ersetzende Zahn koordinatenmäßig zu der Achse 6 des Formkörpers ausgerichtet werden, um den Basiskörper 11 sowie die darauf verbleibenden Bereiche der Schicht 4 in einer optimierten Lage zu orientieren. Es sollte darauf geachtet werden, daß der sichtbare Bereich des Zahnersatzes vollständig von der äußeren Schicht 4 bedeckt ist, um das angesprochene, ästhetische Erscheinungsbild des Ersatzes demjenigen des zu ersetzenden Zahns anzupassen. Falls der Formkörper so weit abgefräst werden muß, daß Bereiche der äußeren Schicht vollständig entfernt werden und der Basiskörper 11 die äußere, sichtbare Seite bildet, wird dieser Bereich in einer Richtung orientiert, die nach dem Einbau des Ersatzteils beim Patienten nicht sichtbar ist.

Der Formkörper, wie er in Figur 3 dargestellt ist, besitzt eine Länge 9 von 40 mm, einen Durchmesser 10 der unteren Kegelstumpfendfläche 12 von 15 mm, einen Durchmesser 13 der oberen Kegelstumpfendfläche 14 von 25 mm und einen Durchmesser 15 des Basiskörpers 11 von etwa 8 mm. Auch bei diesem Formkörper kann von der Kegelstumpfendfläche 12 aus in einer entsprechenden Sacklochbohrung ein nicht näher darstellter Haltezapfen eingesetzt werden, um diesen Formkörper in die Aufnahme eines Fräswerkzeugs einzuspannen.

In Figur 4 ist eine gegenüber dem Formkörper 1 der Figuren 1 und 4 modifizierter Aufbau gezeigt, wobei die Darstellung der Figur 4 einen Schnitt zeigt, der senkrecht zu der Achse 6 der Figur 2 vorgenommen ist. In diesem Ausführungsbeispiel ist der Basiskörper 1 von einer mittleren Schicht 16 und einer äußeren Schicht 17 umgeben. Die jeweiligen Schichten 16 und 17 sind mit unterschiedlichen Pigmentierungen versehen, wobei die äußere Schicht 17 die geringste Pigmentierung aufweist, während der Basiskörper 1 die höchste Pigmentierung aufweist. Auf diese Art und Weise wird der Formkörper von dem Basiskörper 1 aus nach außen stufenweise transparenter gestaltet, um noch weiter das Gesamtbild eines daraus gefrästen Zahns dem natürlichen Erscheinungsbild eines Zahns anzupassen. In dieser Ausführungsform besitzt der Formkörper eine äußere Kantenlänge 18 von etwa 12 mm mit einer Dicke der beiden Schichten 16 und 17 von jeweils etwa 1,5 mm.

Eine weitere Querschnittsdarstellung ist in Figur 5 gezeigt. In diesem Fall ist der Basiskörper 19 im Querschnitt ellipsenförmig und wird auf seiner Außenseite von einer äußeren Schicht 4 umgeben, die allseitig eine etwa gleichbleibende Dicke aufweist. Der Basiskörper 19 besitzt eine Länge von etwa 20 mm in Richtung der großen Halbachse 22, während die Außenabmessung in Richtung der großen Halbachse 22 21 mm beträgt. Die entsprechenden Abmessungen in Richtung der kleinen Halbachse 23 betragen etwa 4 mm für den Basiskörper 19 und etwa 8 mm für die entsprechende Außenabmessung 25 des Halbzeugs.

Es wird ersichtlich werden, daß durch den mindestens zweischichtigen Aufbau des Halbzeugs, d.h. jeweils ein Basiskörper, der von mindestens einer äußeren Schicht umgeben wird, und die unterschiedliche Pigmentierung der Teile, wobei die Pigmentierung zur Außenseite hin geringer wird, das ästhetische Erscheinungsbild des Zahnersatzes demjenigen des natürlichen Zahns, der ersetzt werden soll, sehr nahe angepaßt werden kann. Um eine relativ breite Palette von Zahnbildem anpassen zu können, ist es notwendig, eine gewisse Palette an verschiedenen Formen bereitzuhalten, die wiederum durch eine unterschiedliche Pigmentierung und Grundfärbung in den in Frage kommenden Zahnfarben abgestuft sind.

Als Material für das Halbzeug wird bevorzugt ein mit Glasfüllstoffen bzw. Keramikfüllstoffen gefüllter Kunststoff verwendet, wobei ein Material in der oben angegebenen Zusammensetzung als besonders geeignet hervorzuheben ist. Solche Materialien zeichnen sich durch eine hohe Zähelastizität aus, sie können allerdings dennoch spanabhebend bearbeitet werden. Dies ist sehr wesentlich, da mit einer solchen spanabhebenden Bearbeitung, um den Zahnersatz aus dem Halbzeug bzw. dem Formkörper herauszuarbeiten, eine sehr glatte Oberfläche erzielt wird, im Gegensatz zu einem Schleifen oder einer anderen mechanischen Bearbeitung. Es hat sich gezeigt, daß an der Endform im wesentlichen nur eine Nachpolitur erforderlich ist, um den Zahnersatz fertigzustellen mit einer guten Oberflächenglätte.

Es lassen sich sehr homogene Basiskörper herstellen, auch wenn sie in mehreren Schichten mit unterschiedlichen Pigmentierungen bzw. Transparenzen versehen sind.

Durch die Kompatibilität des Basiskörpers und in den Dental-Labors oder -Praxen vorhandenen Füllungs- oder Verblendmateralien können Ergänzungen bzw. Reparaturen ohne hohen Zeitaufwand und thermische Belastung durchgeführt werden.

## Patentansprüche

1. Halbzeug als Formkörper von Zahnersatzteilen, wie Kronen, Inlays, Onlays, Veneers, Brücken oder Brückenteilen, durch Materialabtragen, wobei der Formkörper aus einem Basiskörper (1; 11; 19) und mindestens einer diesen wenigstens teilweise bedeckenden Schicht (4; 16; 17) aufgebaut ist, wobei der Basiskörper (1; 11; 19) und die Schicht (4; 16; 17) aus unterschiedlich pigmentierten, nicht-metallischen DentalMaterialien aufgebaut sind und der Basiskörper (1; 11; 19) derart farbintensiver ist als die Schicht (4; 16; 17), dass die Transparenz der Schicht (4; 16; 17) für Strahlung im sichtbaren Wellenlängenbereich größer ist als die des Basiskörpers (1; 11; 19) **dadurch gekennzeichnet, dass** der Basiskörper (1; 11; 19) und die äußerste Schicht (4; 17) einen Unterschied in der Transparenz von mindestens 10% aufweisen, dass der Basiskörper (1; 11; 19) eine Transparenz von 20 bis 45 % bezogen auf eine Materialdicke von 1 mm aufweist und dass der äußerste Schichtbereich (4; 17) eine Transparenz von 55 bis 90% bezogen auf eine Materialdicke von 1 mm aufweist.

2. Halbzeug nach Anspruch 1, **dadurch gekennzeichnet, dass** der Basiskörper (1; 11; 19) mit mehreren Schichten (4; 16, 17) bedeckt ist, die verschiedene Oberflächenbereiche des Basiskörpers abdecken.

3. Halbzeug nach Anspruch 2, **dadurch gekennzeichnet, dass** die Schichten eine unterschiedliche Färbung aufweisen.

4. Halbzeug nach Anspruch 2 oder 3, **dadurch gekennzeichnet, dass** sich die Schichten (16, 17) teilweise überlappen.

5. Halbzeug nach einem der Ansprüche 1 bis 4, **dadurch gekennzeichnet, dass** der Basiskörper (11) mit mehreren übereinanderliegenden Schichten (16, 17) bedeckt ist.

6. Halbzeug nach Anspruch 5, **dadurch gekennzeichnet, dass** die Schichten (16, 17) unterschiedlich pigmentiert sind, wobei der Pigment-Anteil der Schichten (16, 17) vom Basiskörper (11) zu der äußeren Schicht (17) hin abnimmt.

7. Halbzeug nach Anspruch 1, **dadurch gekennzeichnet, dass** die Transparenz des Basiskörpers 35 bis 40% beträgt.

8. Halbzeug nach Anspruch 1, **dadurch gekennzeichnet, dass** die Transparenz der äußersten Schicht 60 bis 80% beträgt.

9. Halbzeug nach Anspruch 1, **dadurch gekennzeichnet, dass** die äußerste Schicht (4; 17) eine Dicke von mindestens 0,1 mm besitzt.

10. Halbzeug nach Anspruch 9, **dadurch gekennzeichnet, dass** die äußerste Schicht (4; 17) eine Dicke von maximal 10 mm, vorzugsweise von 2 mm, besitzt.

11. Halbzeug nach Anspruch 10, **dadurch gekennzeichnet, dass** die äußerste Schicht (4; 17) eine Dicke im Bereich von 1 bis 1,5 mm besitzt.

12. Halbzeug nach Anspruch 1, **dadurch gekennzeichnet, dass** der Formkörper stabförmig mit zwei Stirnflächen ausgebildet ist.

13. Halbzeug nach Anspruch 12, **dadurch gekennzeichnet, dass** der Formkörper in Richtung seiner Längsachse eine Länge von 10 bis 40 mm, vorzugsweise zwischen 10 und 20 mm, aufweist.

14. Halbzeug nach Anspruch 12, **dadurch gekennzeichnet, dass** die Stirnflächen einen kreis- oder ellipsenförmigen Querschnitt aufweisen.

15. Halbzeug nach Anspruch 14, **dadurch gekennzeichnet, dass** der Durchmesser der Stirnflächen zwischen 5 und 15 mm beträgt.

16. Halbzeug nach Anspruch 12, **dadurch gekennzeichnet, dass** eine der Stirnflächen im Wesentlichen durch das Material des Basiskörpers gebildet ist.

17. Halbzeug nach Anspruch 12 bis 16, **dadurch gekennzeichnet, dass** der Formkörper konisch ausgebildet ist.

18. Halbzeug nach Anspruch 17, **dadurch gekennzeichnet, dass** die Stirnfläche mit dem kleineren Querschnitt im Wesentlichen durch das Material des Basiskörpers gebildet ist.

19. Halbzeug nach Anspruch 17, **dadurch gekennzeichnet, dass** die Dicke der Schicht(en) in Richtung der Längsachse gesehen zu der Stirnfläche mit dem großen Querschnitt hin zunimmt.

20. Halbzeug nach einem der Ansprüche 1 bis 19, **dadurch gekennzeichnet, dass** der Formkörper aus einem Dental-Kunststoff gebildet ist, der mindestens 30 Ges.-% anorganischen Füllstoff enthält.

21. Halbzeug nach Anspruch 20, **dadurch gekennzeichnet, dass** der Dental-Kunststoff ein Kunststoff auf Basis eines Gemisches aus mehrfunktionellen Methacrylsäureestern ist.

22. Halbzeug nach Anspruch 20, **dadurch gekennzeichnet, dass** der Formkörper als anorganischer Füllstoff rheologisches Ba-Al-Si-Glas und rheologisch wirksame Kieselsäure enthält.

23. Halbzeug nach Anspruch 20, **dadurch gekennzeichnet, dass** der Formkörper aus etwa 30 bis 60 Gew.-% feinstgemahlenem Ba-Al-Silikatglas (Korngröße < 2 µm, mittlere Korngröße = 0,7 µm), etwa 5 bis 30 Gew.-% rheologisch wirksamer Kieselsäure (Primärkorngröße ca. 1 µm) und etwa 10 bis 35 Gew.-% organischem Glas eines Gemisches aus mehrfunktionellem hochmolekularen Methacrylsäureestern gebildet ist.

## Claims

1. Semi-finished part as a moulding of tooth-replacement parts, such as crowns, inlays, onlays, veneers, bridges or parts of bridges by means of material removal, wherein the moulding is constructed from a core (1; 11; 19) and at least one layer (4; 16; 17) that at least partially covers said core, wherein the core (1; 11; 19) and the layer (4; 16; 17) are constructed from differently pigmented, non-metallic dental materials and the core (1; 11; 19) is more colour-intensive than the layer (4; 16; 17) so that the transparency of the layer (4; 16; 17) is greater than that of the core (1; 11; 19) to radiation of light in the visible wavelengths, **characterised in that** the core (1; 11; 19) and the external layer (4; 17) exhibit a difference in transparency of at least 10%, that the core (1; 11; 19) exhibits a transparency of 20 to 45% relative to a material thickness of 1 mm and that the external layer region (4; 17) exhibits a transparency of 55 to 90% relative to a material thickness of 1 mm.

2. Semi-finished part according to Claim 1, **characterised in that** the core (1; 11; 19) is covered with several layers (4; 16; 17) that mask various surface areas of the core.

3. Semi-finished part according to Claim 2, **characterised in that** the layers exhibit a different coloration.

4. Semi-finished part according to Claim 2 or 3, **characterised in that** the layers (16; 17) partially overlap each other.

5. Semi-finished part according to any of Claims 1 to 4, **characterised in that** the core (11) is covered with several layers (16; 17) one on top of the other.

6. Semi-finished part according to Claim 5, **characterised in that** the layers (16; 17) are differently pigmented, wherein the proportion of pigment in the layers (16; 17) decreases going from the core (11) to the outer layer (17).

7. Semi-finished part according to Claim 1, **characterised in that** the transparency of the core ranges from 35 to 40%.

8. Semi-finished part according to Claim 1, **characterised in that** the transparency of the external layer ranges from 60 to 80%.

9. Semi-finished part according to Claim 1, **characterised in that** the external layer (4; 17) has a thickness of at least 0.1 mm.

10. Semi-finished part according to Claim 9, **characterised in that** the external layer (4; 17) has a maximum thickness of 10 mm, preferably 2 mm.

11. Semi-finished part according to Claim 10, **characterised in that** the external layer (4; 17) has a thickness in the range of 1 to 1.5 mm.

12. Semi-finished part according to Claim 1, **characterised in that** the moulding is rod-shaped with two lateral faces.

13. Semi-finished part according Claim 12, **characterised in that** the length of the moulding measures 10 to 40 mm, preferably 10 to 20 mm, along its longitudinal axis.

14. Semi-finished part according to Claim 12, **characterised in that** the lateral faces have a circular or elliptical cross-section.

15. Semi-finished part according to Claim 14, **characterised in that** the diameter of the lateral faces is between 5 and 15 mm.

16. Semi-finished part according to Claim 12, **characterised in that** one of the lateral faces is formed essentially from the material of the core.

17. Semi-finished part according to Claims 12 to 16, **characterised in that** the core is of conical shape.

18. Semi-finished part according to Claim 17, **characterised in that** the lateral face with the smaller cross-section is formed essentially from the material of the core.

19. Semi-finished part according to Claim 17, **characterised in that** the thickness of the layer(s) increases as seen in the direction of the longitudinal axis going towards the lateral face with the larger cross-section.

20. Semi-finished part according to any one of Claims 1 to 19, **characterised in that** the moulding is formed from a dental polymer which comprises at least 30 wt.% inorganic filler.

21. Semi-finished part according to Claim 20, **characterised in that** the dental polymer is a polymer based on a mixture of multi-functional esters of methacrylic acid.

22. Semi-finished part according to Claim 20, **characterised in that** the moulding comprises rheological Ba-A1-Si glass and rheologically active silica as the inorganic filler.

23. Semi-finished part according to Claim 20, **characterised in that** the moulding is formed from about 30 to 60 wt.% finely ground Ba-A1-silicate glass (particle size < 2 µm, average particle size = 0.7 µm), about 5 to 30 wt.% of a rheologically active silica (primary particle size ca. 1 µm) and about 10 to 35 wt.% of an organic glass formed from a mixture of multi-functional high molecular weight esters of methacrylic acid.

## Revendications

1. Produit semi-fini sous la forme d'un corps moulé destiné à la fabrication de prothèses dentaires, tels que couronnes, inlays, onlays, plaqués, bridges ou parties de bridges, par enlèvement de matériau, le corps moulé étant composé d'un corps de base (1; 11; 19) et d'au moins une couche recouvrant au moins partiellement (4; 16; 17), le corps de base (1; 11; 19) et la couche (4; 16; 17) étant constitués de matériaux dentaires non métalliques différemment pigmentés et le corps de base (1; 11; 19) ayant une couleur plus intensive que la couche (4; 16; 17) de sorte que la transparence de la couche (4; 16; 17) au rayonnement dans la plage des longueurs d'ondes visibles soit plus grande que celle du corps de base (1; 11; 19), **caractérise en ce que** le corps de base (1; 11; 19) et la couche externe (4; 17) présentent une différence de transparence d'au moins 10%, que le corps de base (1; 11; 19) présente une transparence de 20 à 45% par rapport à une épaisseur de matériau de 1 mm et que la zone de couche externe (4; 17) présente une transparence de 55 à 90% par rapport à une épaisseur de matériau de 1 mm.

2. Produit semi-fini selon la revendication 1, **caractérisé en ce que** le corps de base (1; 11; 19) est recouvert de plusieurs couches (4; 16; 17) qui recouvrent les différentes zones de surfaces du corps de base.

3. Produit semi-fini selon la revendication 2, **caractérisé en ce que** les couches présentent une coloration différente.

4. Produit semi-fini selon la revendication 2 ou 3, **caractérisé en ce que** les couches (16; 17) se chevauchent partiellement.

5. Produit semi-fini selon l'une quelconque des revendications 1 à 4, **caractérisé en ce que** le corps de base (11) est recouvert de plusieurs couches superposées (16; 17).

6. Produit semi-fini selon la revendication 5, **caractérisé en ce que** les couches (16; 17) sont pigmentées différemment, la proportion du pigment des couches (16; 17) diminuant du corps de base (11) à la couche extérieure (17).

7. Produit semi-fini selon la revendication 1, **caractérisé en ce que** la transparence du corps de base est de 35 à 40%.

8. Produit semi-fini selon la revendication 1, **caractérisé en ce que** la transparence de la couche externe est de 60 à 80%.

9. Produit semi-fini selon la revendication 1, **caractérisé en ce que** la couche externe (4; 17) possède une épaisseur d'au moins 0,1 mm.

10. Produit semi-fini selon la revendication 9, **caractérisé en ce que** la couche externe (4; 17) possède une épaisseur de 10 mm au maximum, de préférence de 2 mm.

11. Produit semi-fini selon la revendication 10, **caractérisé en ce que** la couche externe (4; 7) possède une épaisseur comprise entre 1 et 1,5 mm.

12. Produit semi-fini selon la revendication 1, **caractérisé en ce que** le corps moulé est conçu en forme de barre avec deux surfaces frontales.

13. Produit semi-fini selon la revendication 12, **caractérisé en ce que** le corps moulé présente dans la direction de son axe longitudinal une longueur de 10 à 40 mm, de préférence entre 10 et 20 mm.

14. Produit semi-fini selon la revendication 12, **caractérisé en ce que** les surfaces frontales présentent une coupe transversale en forme de cercle ou d'ellipse.

15. Produit semi-fini selon la revendication 14, **caractérisé en ce que** le diamètre des surfaces frontales se situe entre 5 et 15 mm.

16. Produit semi-fini selon la revendication 12, **caractérisé en ce qu'**une des surfaces frontales est sensiblement formée du matériau du corps de base.

17. Produit semi-fini selon les revendications 12 à 16, **caractérisé en ce que** le corps moulé se présente sous forme conique.

18. Produit semi-fini selon la revendication 17, **caractérisé en ce que** la surface frontale avec la plus petite coupe transversale est formée sensiblement du matériau du corps de base.

19. Produit semi-fini selon la revendication 17, **caractérisé en ce que** l'épaisseur de la ou des couches augmente, en observant dans la direction longitudinale, vers la surface frontale de plus grande coupe transversale.

20. Produit semi-fini selon l'une quelconque des revendications 1 à 19, **caractérisé en ce que** le corps moulé est constitué d'un matériau synthétique dentaire qui contient au moins 30% en poids d'une charge inorganique.

21. Produit semi-fini selon la revendication 20, **caractérisé en ce que** le matériau synthétique dentaire est un matériau synthétique à base d'un mélange d'esters multifonctionnels d'acide méthacrylique.

22. Produit semi-fini selon la revendication 20, **caractérisé en ce que** le corps moulé contient comme charge inorganique du verre de Ba-A1-Si rhéologique et de l'acide silicique actif au plan rhéologique.

23. Produit semi-fini selon la revendication 20, **caractérisé en ce que** le corps moulé est constitué d'environ 30 à 60% en poids de verre de silicate de Ba-A1 très finement broyé (granulométrie < 2 µm, granulométrie moyenne = 0,7 µm), d'environ 5 à 30% en poids d'acide silicique actif au plan rhéologique (granulométrie primaire environ 1 µm), et d'environ 10 à 35% en poids de verre organique d'un mélange d'esters multifonctionnels d'acide méthacrylique à poids moléculaires élevés.
